# EUROPÄISCHE PATENTSCHRIFT

(11) **EP 1 316 365 B1**
(45) Veröffentlichungstag und Bekanntmachung des Hinweises auf die Patenterteilung: **27.12.2006**
(21) Anmeldenummer: 02023171.8
(22) Anmeldetag: 16.10.2002
(51) Int. Cl.: B05B 11/00, G01F 11/02, A61M 15/00

(54) **Dosiervorrichtung**
Dosing device
Dispositif de dosage

(30) Priorität: 29.11.2001 DE 10159692
(43) Veröffentlichungstag der Anmeldung: 04.06.2003
(73) Patentinhaber: Ing. Erich Pfeiffer GmbH, 78315 Radolfzell (DE)
(72) Erfinder: Fuchs, Karl-Heinz, 78315 Radolfzell (DE)
(74) Vertreter: Patentanwälte Ruff, Wilhelm, Beier, Dauster & Partner

(56) Entgegenhaltungen:
- EP-A- 0 472 985
- DE-A1- 4 021 263
- DE-A1- 4 030 530

## Beschreibung

Die Erfindung betrifft eine Dosiervorrichtung mit einem Grundkörper sowie mit einem an dem Grundkörper verdrehgesichert und hubbeweglich gelagerten Betätigungselement, sowie mit einer Zähleinrichtung für die Betätigungshübe, die einen abhängig von einer Hubbewegung des Betätigungselementes zwangsgekoppelt drehbaren Zählring aufweist, und mit wenigstens einem Sperrmittel zum Blockieren des Betätigungselementes nach einer vorgegebenen Anzahl von Betätigungshüben.

Eine solche Dosiervorrichtung ist für unterschiedliche Medien insbesondere in gasförmiger oder fließfähiger Form einsetzbar. Unter fließfähiger Form sind neben flüssigen Medien insbesondere auch zähflüssige, gelartige oder auch pulverförmige Medien zu verstehen.

Aus der DE 33 02 160 A1 ist eine Dosiervorrichtung bekannt, die als manuell betätigbare, einfach wirkende Kolbenpumpe gestaltet ist. Beim Betätigungshub wird eine bestimmte Menge eines Stoffes, insbesondere in zerstäubter Form, ausgegeben. Eine derartige Dosiervorrichtung wird insbesondere für die Dosierung von Pharmazeutika für medizinische Zwecke eingesetzt. Um zu gewährleisten, dass für die medizinische Anwendungszeit keine Unter- oder Überdosierung erfolgt oder eine Einnahme zu lange oder zu kurz durchgeführt wird, ist die Dosiervorrichtung mit einer Zählvorrichtung versehen. Die Zählvorrichtung weist einen Zählring auf, der koaxial um einen Grundkörper herum drehbar gelagert ist. Die Dosiervorrichtung wird durch ein Betätigungselement mittels einer Schrittmechanik manuell in Gang gesetzt, das relativ zu dem Grundkörper hubbeweglich und verdrehgesichert gelagert ist. Der Zählring ist mit dem Betätigungselement derart zwangsgekoppelt, dass bei einer Hubbewegung des Betätigungselementes der Zählring pro Betätigungshub um jeweils eine Zählstelle in Umfangsrichtung weiter rückt. Dem Zählring ist ein Anschlag zugeordnet, der die Drehbewegung in Umfangsrichtung des Zählringes auf einen Drehwinkel begrenzt, der geringer als 360° ist. Sobald der Zählring den Anschlag erreicht hat, ist eine weitere Betätigung des Betätigungselementes nicht möglich. Die Anzahl der Betätigungshübe ist somit durch die Anzahl der Zählschritte des Zählringes begrenzt und kann durch Auswahl des Zählringes auf das jeweils zu dosierende Medium, insbesondere eine medizinische Anwendung mittels eines Pharmazeutikums, abgestimmt werden.

Aufgabe der Erfindung ist es, eine Dosiervorrichtung der eingangs genannten Art zu schaffen, die eine verbesserte Dosierung ermöglicht.

Diese Aufgabe wird durch die Merkmale des Anspruchs 1 gelöst, wobei wenigstens ein Sperrmittel dem Zählring derart zugeordnet ist, dass der Zählring mehr als eine volle Umdrehung durchführen kann, bevor das Betätigungselement blockiert wird. Dadurch, dass der Zählring um mehr als eine volle Umdrehung verdreht werden kann, ist es möglich, eine größere Anzahl an Betätigungshüben durchzuführen, wodurch eine verbesserte Dosierung erzielbar ist.

Bei der Erfindung sind dem Zählring Führungsmittel zugeordnet, die den Zählring in Hubrichtung überlagert oder gestuft zu einer Drehbewegung führen. Dabei ist es möglich, dass der Zählring kontinuierlich mit einer Schraub- oder Wendelbewegung geführt wird, so dass Bewegungen in Drehrichtung und Hubrichtung einander überlagert sind. Es ist auch möglich, den Zählring gestuft zu führen, indem Drehbewegungsabschnitten über jeweils einen bestimmten Umfangswinkel eine kurze Hubbewegung auf das jeweils nächste Stufenniveau zwischengeschaltet werden. Unter der Überlagerung der Drehbewegung durch eine Hubbewegung ist eine Bewegung des Zählringes mit einer bestimmten oder mehreren vorgegebenen Steigungen zu verstehen, wobei die jeweilige Steigung sich aus dem Weg in Umfangsrichtung einerseits und der Hubkomponente in Axialrichtung zusammensetzt.

In weiterer Ausgestaltung der Erfindung ist der Zählring wendelförmig drehbar relativ zu einer Mittellängsachse des Grundkörpers beweglich gelagert. Die Wendelbewegung ermöglicht eine Drehbeweglichkeit des Zählringes über eine volle Umdrehung hinaus, so dass die Anzahl der Zählschritte entsprechend vergrößert werden kann. Es ist insbesondere möglich, die Anzahl der Zählschritte gegenüber dem Stand der Technik nahezu zu verdoppeln.

In weiterer Ausgestaltung der Erfindung ist der Zählring mittels eines Schraubgewindes an dem Grundkörper oder an dem Betätigungselement gehalten, dessen Steigung auf Weiterschaltungsmittel für den Zählring abgestimmt ist. Der Zählring bildet somit eine Gewindemutter, die vorzugsweise mit einem Innengewinde versehen ist. Die Steigung des Schraubgewindes ist so gewählt, dass diese einer Hubbewegung des Betätigungselementes keinen allzu großen Widerstand entgegenbringt, um die manuelle Bedienbarkeit nicht zu beeinträchtigen. Vorzugsweise ist die Steigung des Schraubgewindes nicht selbsthemmend gestaltet.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in teilweise geschnittener Darstellung eine Ausführungsform einer erfindungsgemäßen Dosiervorrichtung,
- Fig. 2: schematisch einen Ausschnitt der Dosiervorrichtung nach Fig. 1 entlang der Schnittlinie II-II in Fig. 1 und
- Fig. 3: ebenfalls schematisch eine Schnittdarstellung eines Ausschnittes III-III in Fig. 1.

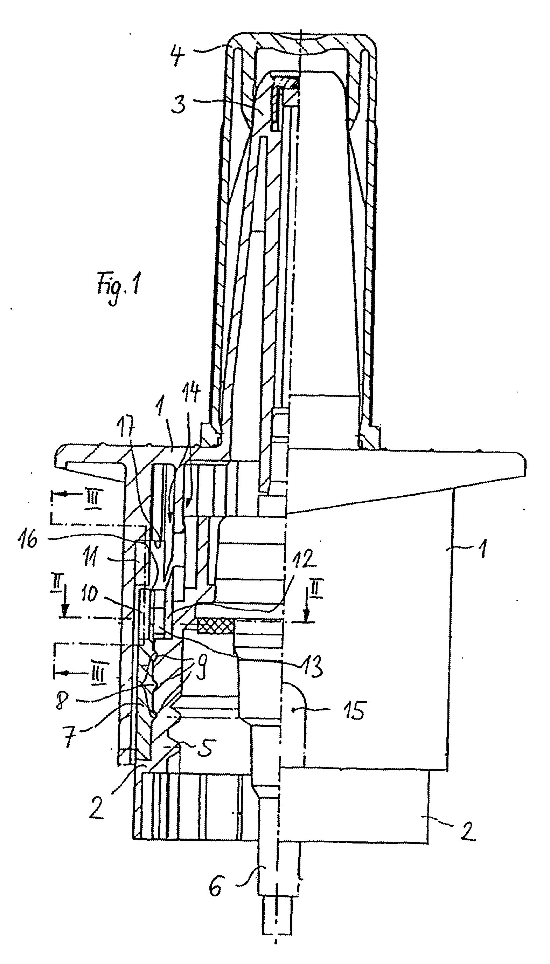

Mit einer Dosiervorrichtung nach Fig. 1 bis 3 ist eine Zerstäubung und dosierte Ausbringung eines pharmazeutischen Mediums vorgesehen. In gleicher Weise kann die Dosiervorrichtung nach den Fig. 1 bis 3 auch für andere Medien unterschiedlicher Art eingesetzt werden. Die Dosiervorrichtung weist einen Grundkörper 2 auf, der beim dargestellten Ausführungsbeispiel als auf ein Behältnis wie insbesondere eine Flasche aufschraubbare Schraubkappe gestaltet ist. Hierzu weist die Schraubkappe ein Innengewinde 5 auf, das auf einen entsprechenden Flaschenhals oder einen Hals eines ähnlichen Behältnisses aufschraubbar ist. Im aufgeschraubten Zustand ist der Grundkörper 2 stationär positioniert. Relativ zu dem Grundkörper 2 ist ein Betätigungselement 1, vorliegend in Form eines Nasensprayaufsatzes, hubbeweglich und verdrehgesichert auf dem Grundkörper 2 gelagert. Die Hubbeweglichkeit des Betätigungselementes 1 erfolgt koaxial zu einer Mittellängsachse des Grundkörpers 2, die strichpunktiert dargestellt, jedoch nicht mit Bezugszeichen versehen ist. Das Betätigungselement 1 weist einen nach oben ragenden Fortsatz auf, der an seinem oberen Stirnende eine Zerstäuberdüse 3 besitzt. Der Fortsatz wird von einer Verschlusskappe 4 verschlossen. Das Betätigungselement 1 weist in seinem unteren Bereich einen Mantel auf, der den Grundkörper 2 über einen Teil seiner Höhe umgibt. Im Bereich seiner Oberseite ist der Mantel mit horizontalen Auflageflächen versehen, die in den Nasensprayfortsatz übergehen. Die Auflageflächen dienen als Angriffsfläche für Finger einer Hand einer Bedienperson, um eine entsprechende Pumpbewegung auf das Betätigungselement 1 und damit auf die gesamte, vorliegend als Kolbenpumpe ausgeführte Dosiervorrichtung auszuüben.

Das Betätigungselement 1 ist mit Hilfe von axial, d.h. parallel zur Mittellängsachse des Grundkörpers 2, verlaufenden Führungsrippen und - nuten 14 hubbeweglich und verdrehgesichert geführt. Zusätzlich sind die Führungsrippen und -nuten über entsprechende, nicht näher bezeichnete Ringschulterabschnitte in einer oberen Endposition des Betätigungselementes 1 in Axialrichtung formschlüssig miteinander in Verbindung, wodurch eine obere Axialbegrenzung für das Betätigungselement 1 erzielt wird. Dadurch wird das Betätigungselement 1 durch Federkräfte einer an sich bekannten Pumpeinrichtung in unbelastetem Zustand gegen den so gebildeten Anschlag gedrückt gehalten.'

Das Betätigungselement 1 wirkt auf die als Kolbenpumpe ausgeführte Pumpeinrichtung 6, deren Ansaugleitung in das nicht dargestellte Speicherbehältnis ragt.

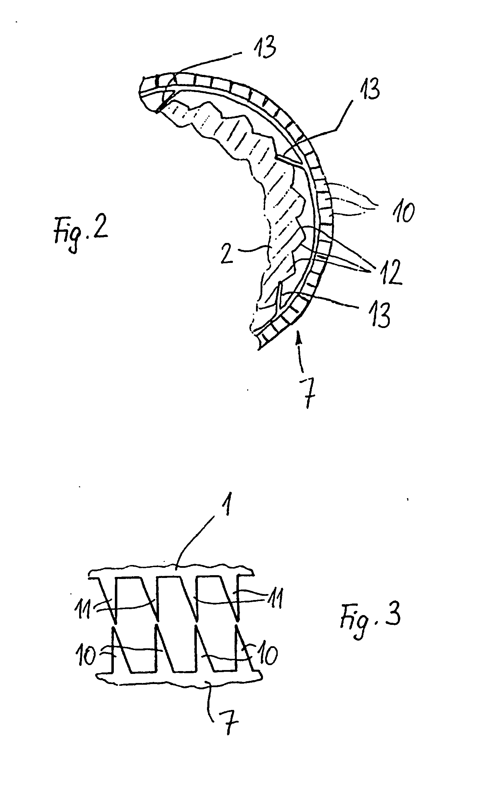

Zwischen dem Grundkörper 2 und dem Mantel des Betätigungselementes 1 ist ein Zählring 7 angeordnet, der mittels eines Innengewindes 8 an einem korrespondierenden Außengewinde 9 am Außenumfang des Grundkörpers 2 wendelförmig beweglich geführt ist. Der Zählring 7 weist in seinem oberen Randbereich außenseitig eine Axialverzahnung 10 (Fig. 2 und 3) auf. Entsprechende Zähne der Axialverzahnung 10 ragen axial nach oben ab und weisen jeweils - in Umfangsrichtung - auf der gleichen Seite eine schräg verlaufende Zahnflanke auf. Korrespondierend hierzu ist innenseitig an dem Mantel des Betätigungselementes 1 eine entsprechende Anzahl von Zähnen einer weiteren Axialverzahnung 11 vorgesehen, die einstückig an dem Betätigungselement 1 angeformt ist. Die Zähne der Axialverzahnung 11 sind entsprechend entgegengesetzt zu der Axialverzahnung 10 nach unten gerichtet. Jeder Zahn weist eine entsprechend korrespondierende schräge Zahnflanke auf. Die Axialverzahnungen 10 und 11 sind derart axial übereinander angeordnet, dass bei einer Hubbewegung des Betätigungselementes 1 nach unten die Zähne der oberen Axialverzahnung 11 mit ihren schrägen Zahnflanken auf die korrespondierenden schrägen Zahnflanken der unteren Axialverzahnung 10 auftreffen und so auf den Zählring 7 eine Kraft in Umfangsrichtung ausüben. Aufgrund der Zwangsführung des Zählringes 7 entlang der Schrauben- oder Wendelbahn wird der Zählring 7 somit zum einen in Umfangsrichtung um einen bestimmten Betrag verdreht und zum anderen entlang der Steigung der als Gewinde gestalteten Führungsmittel 8, 9 nach oben oder nach unten bewegt. Die Federstege 13 und die Stützverzahnung 12 bilden in Verbindung mit den Axialverzahnungen 10, 11 Weiterschaltmittel für den Zählring, die den Zählring in Zählrichtung schrittweise bewegen. Somit wird eine Schrittmechanik zur Bewegung des Zählringes 7 gebildet. Eine bevorzugte Ausführungsform sieht bei einem Innendurchmesser des Zählringes 7 von 23mm eine Steigung für das Führungsgewinde von 2mm vor.

Im oberen Randbereich des Zählringes 7 ist innenseitig des zylindrischen Hülsenabschnittes und damit auf Höhe der Axialverzahnung 10 eine definierte Anzahl von Federstegen 13 vorgesehen, die gemäß Fig. 2 schräg ausgerichtet sind und mit einer korrespondierenden Stützverzahnung 12 am Außenmantel des Grundkörpers 2 zusammenwirken. Die Federstege 13 in Verbindung mit der Stützverzahnung 12 gewährleisten, dass der Zählring 7 lediglich in einer einzelnen Drehrichtung drehbar ist. In der entgegengesetzten Drehrichtung sperren die Federstege 13 und die Stützverzahnung 12 eine entsprechende Drehbewegung des Zählringes 7. Die Federstege 13, die Stützverzahnung 12 und die Axialverzahnungen 10, 11 sind derart aufeinander abgestimmt, dass bei einer Hubbewegung des Betätigungselementes 1 der Zählring 7 jeweils um einen einzelnen Zählschritt weiterbewegt wird und nicht mehr in die ursprüngliche Lage zurückgedreht werden kann. Die Federstege 13 blockieren Drehbewegungen des Zählringes 7 entgegen der definierten Zählrichtung.

Der Zählring weist an seinem Außenumfang eine der Nummerierung der fortlaufenden Zählschritte entsprechende Zahlenfolge auf, wobei die Zahlenfolge beim vorliegenden Ausführungsbeispiel entsprechend der Steigung des Führungsgewindes, insbesondere mit- oder gegenlaufend, wendelförmig längs des Außenumfangs des Zählringes 7 aufgebracht ist. Der Mantel des Betätigungselementes 1 weist eine Sichtöffnung 15 auf, die derart gestaltet ist, dass immer jeweils eine Zahl, nämlich die des zugehörigen Zählschrittes, erkennbar ist.

Bei einem nicht dargestellten Ausführungsbeispiel der Erfindung ist die Zahlenfolge nicht stetig ansteigend, sondern gestuft längs des Außenumfangs des Zählringes aufgebracht.

Bei einem nicht dargestellten Ausführungsbeispiel der Erfindung ist als Sichtöffnung ein variables Sichtfenster vorgesehen, das durch Zwangsführungsmittel abhängig von der Drehbewegung des Zählringes zwangsläufig mitbewegt wird, um die jeweils aktuelle Zahl der Zahlenfolge erfassen zu können.

Bei einem weiteren, erfindungsgemäßen Ausführungsbeispiel sind wenigstens zwei Sichtöffnungen auf unterschiedlicher Höhe und/oder an unterschiedlichen Umfangsbereichen des Zählringes vorgesehen, die alternativ die entsprechenden Zahlen der stetig oder unstetig ansteigenden oder abfallenden Zahlenfolge sichtbar machen.

Eine obere Stirnfläche 16 des Zählringes 7 dient in Verbindung mit korrespondierenden Stützflächen 17 des Betätigungselementes 1 als Sperrmittel, die nach einer gewissen Anzahl von Zählschritten eine weitere Betätigung der Dosiervorrichtung blockiert. Der Zählring 7 wandert - beginnend von der ersten Hubbewegung - mit der Anzahl der Hubbetätigungen nach Art einer Schnecke allmählich auf dem Grundkörper 2 nach oben, wobei über die Sichtöffnung 15 jeweils angezeigt wird, welcher Zählschritt erreicht ist. Nach einer vorgegebenen Anzahl von Zählschritten hat sich der Zählring 7 so weit nach oben geschraubt, dass das Betätigungselement 1 nicht mehr oder nahezu nicht mehr nach unten drückbar ist, da die Stützfläche 17 und die Stirnfläche 16 aufeinander treffen. Jetzt ist das Ende der Dosiervorgänge erreicht, wobei die Anzahl der Zählringe und damit die Anzahl der Hubbetätigungen jeweils exakt auf die gewünschte Dosierungs- und Anwendungsdauer für das auszubringende Medium abgestimmt sind.

## Patentansprüche

1. Dosiervorrichtung mit einem Grundkörper (2) sowie mit einem an dem Grundkörper verdrehgesichert und hubbeweglich gelagerten Betätigungselement (1), sowie mit einer Zähleinrichtung für die Betätigungshübe, die einen abhängig von einer Hubbewegung des Betätigungselementes zwangsgekoppelt drehbaren Zählring (7) aufweist, und mit wenigstens einem Sperrmittel (16,17) zum Blockieren des Betätigungselementes nach einer vorgegebenen Anzahl von Betätigungshüben, **dadurch gekennzeichnet, dass** dem Zählring (7) Führungsmittel (8, 9) zugeordnet sind, die den Zählring (7) in Hubrichtung überlagert oder gestuft zu einer Drehbewegung führen, und dass das wenigstens eine Sperrmittel (16, 17) dem Zählring (7) derart zugeordnet ist, dass der Zählring (7) mehr als eine volle Umdrehung durchführen kann, bevor das Betätigungselement (1) blockiert wird.

2. Dosiervorrichtung nach Anspruch 1 **dadurch gekennzeichnet, dass** der Zählring (7) wendelförmig drehbar relativ zu einer Mittellängsachse des Grundkörpers (2) beweglich gelagert ist.

3. Dosiervorrichtung nach Anspruch 2, **dadurch gekennzeichnet, dass** der Zählring (7) mittels eines Schraubgewindes (8, 9) an dem Grundkörper (2) oder an dem Betätigungselement (1) gehalten ist, dessen Steigung auf Weiterschaltungsmittel (12, 13) für den Zählring (7) abgestimmt ist.

## Claims

1. Dosing device having a base body (2), as well as an actuating element (1) mounted in non-rotatable and liftable manner on the body, as well as with a counting device for the actuating strokes, which has a rotary counting ring (7) forcibly coupled as a function of a lifting movement of the actuating element, and with at least one locking means (16, 17) for blocking the actuating element following a predetermined number of actuating strokes, **characterized in that** with the counting ring (7) are associated guide means (8, 9), which are superimposed on the counting ring (7) in the lift direction or guide same alternately to a rotary movement, and **in that** the at least one locking means (16, 17) is associated with the counting ring (7) in such a way that the latter can perform more than one complete revolution before the actuating element (1) is blocked.

2. Dosing device according to claim 1, **characterized in that** the counting ring (7) is supported so as to be helically rotatable relative to a median longitudinal axis of the body (2).

3. Dosing device according to claim 2, **characterized in that** the counting ring (7) is held by means of a screw thread (8, 9) on the body (2) or on the actuating element (1), whose pitch is matched to indexing means (12, 13) for the counting ring (7).

## Revendications

1. Dispositif de dosage avec un corps de base (2) ainsi qu'avec un élément d'actionnement (1) logé sur le corps de base de manière à résister à la torsion et à pouvoir effectuer un mouvement de course, ainsi qu'avec un dispositif de comptage pour les courses d'actionnement qui présente un anneau de comptage (7) pouvant tourner par couplage forcé en fonction d'un mouvement de course de l'élément d'actionnement, et avec au moins un moyen d'arrêt (16, 17) pour bloquer l'élément d'actionnement après un nombre défini de courses d'actionnement, **caractérisé en ce que** des moyens de guidage (8, 9) qui entraînent l'anneau de comptage (7) dans un mouvement de rotation dans le sens de la course par superposition ou par étages sont affectés à l'anneau de comptage (7) et **en ce que** le moyen d'arrêt au moins (16, 17) est affecté à l'anneau de comptage (7) de telle manière que l'anneau de comptage (7) peut effectuer plus d'une rotation complète avant que l'élément d'actionnement (1) soit bloqué.

2. Dispositif de dosage selon la revendication 1, **caractérisé en ce que** l'anneau de comptage (7) est logé de manière mobile et de manière à pouvoir tourner de manière hélicoïdale par rapport à un axe longitudinal médian du corps de base (2).

3. Dispositif de dosage selon la revendication 2, **caractérisé en ce que** l'anneau de comptage (7) est maintenu sur le corps de base (2) ou sur l'élément d'actionnement (1) au moyen d'un filetage (8, 9) dont le pas est harmonisé à des moyens de transfert (12, 13) pour l'anneau de comptage (7).
